# EUROPEAN PATENT APPLICATION

(11) **EP 4 749 433 A1**
(43) Date of publication of application: **27.05.2026**
(21) Application number: 23949326.5
(22) Date of filing: 18.08.2023
(51) Int. Cl.: G06F 8/34

(54) **METHOD FOR AUTOMATICALLY GENERATING SOLUTION TEMPLATE, AND DEVICE, MEDIUM AND PROGRAM PRODUCT**

(71) Applicant: Siemens Aktiengesellschaft, 80333 München (DE)
(72) Inventor: WANG, Haifeng, Shanghai, 200082 (CN); HU, Feihuang, Shanghai, 200082 (CN); ZOU, Wenchao, Shanghai, 200082 (CN); JIA, Shaotu, Shanghai, 200082 (CN)
(74) Representative: Isarpatent
(86) International application number: PCT/CN2023/113885
(87) International publication number: WO 2025/039132

(57) **Abstract**

Embodiments of this application mainly relate to the field of computers, and in particular, to a method for automatically generating a solution template, a device, a medium, and a program product. The method includes: receiving an instruction inputted by a user to create a solution template; extracting names of basic units from first industrial automation software; generating a prompt word based on the instruction, so that a large language model (LLM) lists, by referencing the names of the basic units in the first industrial automation software, all tasks executing the instruction in sequence; and calling, based on all the tasks outputted by the LLM, corresponding basic units in the first industrial automation software, and generating a connection relationship between the basic units, to obtain the solution template corresponding to the instruction.

## Description

### TECHNICAL FIELD

Embodiments of this application mainly relate to the field of computers, and in particular, to a method for automatically generating a solution template, a device, a medium, and a program product.

### BACKGROUND

With the acceleration of digital transformation, currently, lots of industrial automation software are available on the market. For some industrial automation software, an engineer usually needs a large amount of time to understand each component of related software, and implements programming of a related solution through professional knowledge of the engineer. For some other industrial automation software, to reduce learning costs of the engineer, a visual platform is designed, so that the engineer can construct a solution with less code in a graphical dragging manner. However, efficiency improved by this type of industrial automation software is limited, and an engineer with rich professional knowledge is still needed to construct the solution. Otherwise, a problem in feasibility arises.

### SUMMARY

Embodiments of this application provide a method for automatically generating a solution template, a device, a medium, and a program product. According to the embodiments of this application, a user may input only a related solution requirement, to obtain a corresponding solution template in industrial automation software, which greatly reduces costs of learning software by the user and improves efficiency of obtaining a solution by the user.

According to a first aspect, a method for automatically generating a solution template is provided, including: receiving an instruction inputted by a user to create a solution template; extracting names of basic units from first industrial automation software; generating a prompt word based on the instruction, so that a large language model (LLM) lists, by referencing the names of the basic units in the first industrial automation software, all tasks executing the instruction in sequence; and calling, based on all the tasks outputted by the LLM, corresponding basic units in the first industrial automation software, and generating a connection relationship between the basic units, to obtain the solution template corresponding to the instruction.

According to a second aspect, an apparatus for automatically generating a solution template is provided, including: a receiving module, configured to receive an instruction inputted by a user to create a solution template; an extraction module, configured to extract names of basic units from first industrial automation software; a generation module, configured to generate a prompt word based on the instruction, so that an LLM lists, by referencing the names of the basic units in the first industrial automation software, all tasks executing the instruction in sequence; and a calling module, configured to call, based on all the tasks outputted by the LLM, corresponding basic units in the first industrial automation software, and generate a connection relationship between the basic units, to obtain the solution template corresponding to the instruction.

According to a third aspect, an electronic device is provided, including: at least one memory, configured to store computer-readable code; and at least one processor, configured to call the computer-readable code to perform the steps in the method provided in the first aspect.

According to a fourth aspect, a computer-readable medium is provided, storing computer-readable instructions, where the computer-readable instructions, when executed by a processor, cause the processor to perform the steps in the method provided in the first aspect.

According to a fifth aspect, a computer program product is provided. The computer program product is tangibly stored on a computer-readable medium and includes computer-executable instructions, and the computer-executable instructions, when executed, cause at least one processor to perform the steps in the method provided in the first aspect.

### BRIEF DESCRIPTION OF THE DRAWINGS

The following accompanying drawings are only intended to give schematic descriptions and explanations of embodiments of this application, but are not intended to limit the scope of the embodiments of this application. In the drawings:
FIG. 1 is a flowchart of a method for automatically generating a solution template according to an embodiment of this application;
FIG. 2 is a schematic diagram of an apparatus for automatically generating a solution template according to an embodiment of this application; and
FIG. 3 is a schematic diagram of an electronic device according to an embodiment of this application.

### DESCRIPTION OF REFERENCE NUMERALS

| | | | | | |
|---|---|---|---|---|---|
| 100: | Method for automatically generating a solution template | | | 101-104: | Steps of a method |
| 20: | Apparatus for automatically generating a solution template | | | 21: | Receiving module |
| 22: | Extraction module | 23: | Generation module | 24: | Calling module |
| 200: | Electronic device | 301: | Processor | 302: | Communication interface |
| 303: | Memory | 304: | Communication bus | 305: | Program |

### DETAILED DESCRIPTION

A subject described herein is discussed now with reference to exemplary implementations. It should be understood that, discussion of the implementations is merely intended to make a person skilled in the art better understand and implement the subject described herein, and is not intended to limit the protection scope of the claims, the applicability, or examples. Changes may be made to functions and arrangements of the discussed elements without departing from the protection scope of the content of the embodiments of this application. Various processes or components may be omitted, replaced, or added in each example as needed. For example, the described method may be performed based on an order different from the order described herein, and steps may be added, omitted, or combined. In addition, features described with respect to some examples may also be combined in another example.

As used in this specification, the term "including" and variants thereof represent open terms, and mean "including but is not limited to". The term "based on" means "at least partially based on". The terms "one embodiment" and "an embodiment" mean "at least one embodiment". The term "another embodiment" means "at least one other embodiment". The terms "first", "second", and the like may represent different objects or the same object. Another definition may be included explicitly or implicitly in the following. Unless otherwise clearly specified in the context, a definition of a term is consistent throughout the specification.

The embodiments of this application are described in detail below with reference to the accompanying drawings.

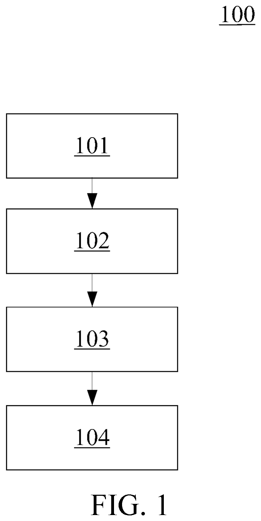

FIG. 1 is a flowchart of a method for automatically generating a solution template according to an embodiment of this application. As shown in FIG. 1, the method 100 for automatically generating a solution template includes the following steps.

Step 101: Receive an instruction inputted by a user to create a solution template.

In an embodiment, the user may input an instruction of "picking up and placing a bin by a robot" on a graphical user interface of first industrial automation software.

Step 102: Extract names of basic units from first industrial automation software.

Optionally, the basic unit includes a basic functional block or a basic shape. Optionally, the name may be description information.

For example, in an embodiment, the extracted names of the basic units include "point-to-point mobile robot", "object recognition", "pose recognition", "machine clamping jaws open", "machine clamping jaws close", or the like.

Step 103: Generate a prompt word based on the instruction, so that a large language model (LLM) lists, by referencing the names of the basic units in the first industrial automation software, all tasks executing the instruction in sequence.

Specifically, the prompt word needs to include two parts of content. A first part is that the LLM is prompted to list the steps of all tasks executing the user instruction in sequence. A specific prompt word may be, for example, "Please list all tasks that need to be executed in {an instruction entered by the user} in sequence". Specifically, in an embodiment, the prompt word may be "Please list all tasks that need to be executed in picking up and placing the bin by the robot in sequence". A second part is that the LLM needs to be prompted to reference the names of the basic units in the first industrial automation software in description of a specific task step. A specific prompt word may be, for example, "{ a name 1 of a basic unit, a name 2 of a basic unit, ..., and a name n of a basic unit} needs to be used in the task". Specifically, in an embodiment, the prompt word may be "a point-to-point mobile robot needs to be used in the task, object recognition, pose recognition, machine clamping jaws open, machine clamping jaws close, ...". It should be noted that the prompt word in the first part and the prompt word in the second part need to be jointly inputted into the LLM.

Optionally, before step 103, a language of the instruction is determined. An applicable LLM is determined based on the language of the instruction. Next, communication with the appropriate LLM is established.

Step 104: Call, based on all the tasks outputted by the LLM, corresponding basic units in the first industrial automation software, and generate a connection relationship between the basic units, to obtain the solution template corresponding to the instruction.

In this embodiment of this application, a requirement instruction of the user for a solution template is received, and the related requirement instruction and names of all basic units of the first industrial automation software are used as a part of the prompt word of the LLM. Based on task steps that satisfy the requirement outputted by the LLM, a corresponding basic unit may be automatically called and a relationship between different basic units may be established without the need of the user to perform graphical dragging and configuration on the graphical user interface in the first industrial automation software. It may be learned that the embodiments of this application greatly reduce a requirement on engineering expertise of the user, and improve use efficiency of the industrial automation software, thereby reducing a corresponding engineering operation amount. In addition, in the embodiments of this application, various industrial automation software may be conveniently adapted to generate corresponding solution templates for the user, which has very strong scalability.

In an embodiment, the names of the basic units in the first industrial automation software are inputted into the LLM, to determine names of basic units that need to be used for a first task in all the tasks. An ordering of the names of the basic units that need to be used during execution of the first task is determined through the LLM. The ordering of the names of the basic units in each of all the tasks is obtained. An ordering set is obtained based on the ordering of the names of the basic units in each of all the tasks and an ordering of all the tasks outputted by the LLM. Based on the ordering set, corresponding basic units are called in the first industrial automation software, and the connection relationship between the basic units is generated. Specifically, a basic unit corresponding to each position may be determined through the ordering set. A corresponding basic unit is called in an order of positions in the first industrial automation software. An input/output relationship between two adjacent basic units is established.

In an embodiment, it is assumed that all tasks outputted by the LLM include two tasks in total, it is determined that names of basic units that need to be used in Task One include A, B, and C, and names of basic units that need to be used in Task Two include D and E. Next, it is determined through the LLM that a corresponding ordering is B, A, and C when Task One is executed, and a corresponding sequence is E and D when the Task Two is executed. The ordering set includes {B, A, C, E, D}. Next, a corresponding basic unit may be called in the first industrial automation software based on the basic unit corresponding to each position, and is displayed on the graphical user interface, and the input/output relationship between two adjacent basic units is automatically established.

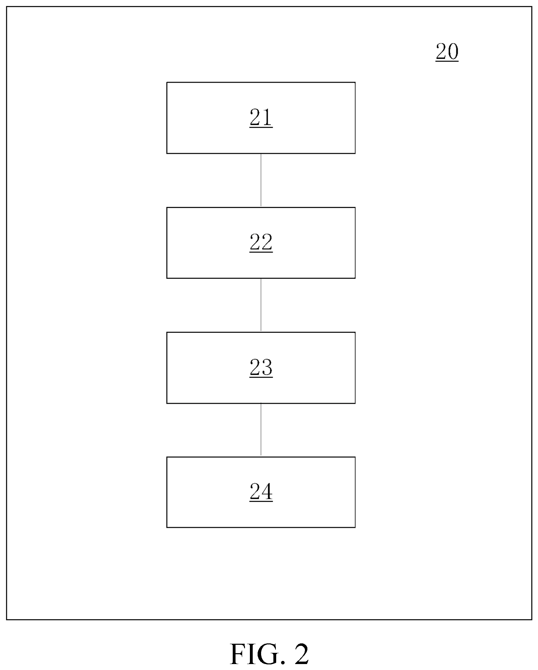

FIG. 2 is a schematic diagram of an apparatus for automatically generating a solution template according to an embodiment of this application. As shown in FIG. 2, the apparatus 20 for automatically generating a solution template includes:
a receiving module 21, configured to receive an instruction inputted by a user to create a solution template;
an extraction module 22, configured to extract names of basic units from first industrial automation software;
a generation module 23, configured to generate a prompt word based on the instruction, so that an LLM lists, by referencing the names of the basic units in the first industrial automation software, all tasks executing the instruction in sequence; and
a calling module 24, configured to call 104, based on all the tasks outputted by the LLM, corresponding basic units in the first industrial automation software, and generate a connection relationship between the basic units, to obtain the solution template corresponding to the instruction.

According to the embodiments of this application, the user may input only a related solution requirement, to obtain a corresponding solution template in the industrial automation software, which greatly reduces costs of learning software by the user and improves efficiency of obtaining a solution by the user.

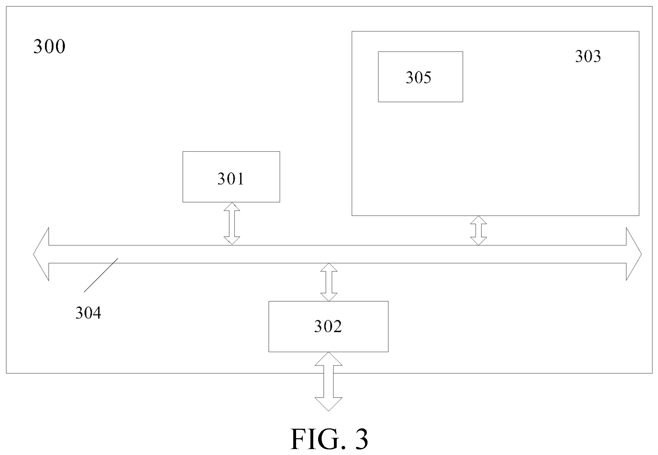

FIG. 3 is a schematic diagram of an electronic device according to an embodiment of this application. A specific implementation of the electronic device is not limited in a specific embodiment of this application. As shown in FIG. 3, the electronic device 300 may include a processor 301, a communication interface 302, a memory 303, and a communication bus 304.

The processor 301, the communication interface 302, and the memory 303 perform communication with each other through the communication bus 304.

The communication interface 302 is configured to communicate with another electronic device or a server.

The processor 301 is configured to execute a program 305, and specifically, may perform related steps in any one of the foregoing method embodiments.

Specifically, the program 305 may include program code. The program code includes a computer operation instruction.

The processor 301 may be a central processing unit (CPU), or an application specific integrated circuit (ASIC), or one or more integrated circuits configured to implement the embodiments of this application. One or more processors included in an intelligent device may be a same type of processor, such as one or more CPUs, or may be different types of processors, such as one or more CPUs and one or more ASICs.

The memory 303 is configured to store the program 305. The memory 303 may include a high-speed RAM memory, or may further include a non-volatile memory, for example, at least one magnetic disk memory.

The program 305 may be specifically configured to cause the processor 301 to perform any method in the plurality of method embodiments in the foregoing embodiments.

For a specific implementation of each step in the program 305, reference may be made to the corresponding description in the corresponding steps and units in the foregoing method embodiment for automatically generating a solution template. Details are not described herein. It may be clearly understood by a person skilled in the art that, for the purpose of convenient and brief description, for a detailed operating process of the foregoing device and module, reference may be made to the description of a corresponding process in the foregoing method embodiment. Details are not described herein again.

This application further provides a computer-readable storage medium, storing an instruction for causing a machine to perform any method in the plurality of method embodiments as described herein. Specifically, a system or an apparatus equipped with a storage medium may be provided. The storage medium stores software program code for implementing functions of any one of the above embodiments, and a computer (the CPU or a microprocessor unit (MPU)) of the system or the apparatus is enabled to read and execute the program code stored in the storage medium.

In this case, the program code read from the storage medium may implement the functions of any one of the above embodiments. Therefore, the program code and the storage medium storing the program code form a part of this application.

Embodiments of the storage medium for providing the program code include a floppy disk, a hard disk, a magneto-optical disk, an optical disk (such as a CD-ROM, a CD-R, a CD-RW, a DVD-ROM, a DVD-RAM, a DVD-RW, and a DVD+RW), a magnetic tape, a non-volatile storage card, and a ROM. Optionally, the program code may be downloaded from a server computer through a communication network.

An embodiment of this application further provides a computer program product, including computer instructions. The computer instructions instruct a computing device to perform the operations corresponding to any of the above plurality of method embodiments.

It should be pointed out that according to requirements of implementation, each component/step described in the embodiments of this application may be split into more components/steps, and two or more components/steps or partial operations of components/steps may be merged into new components/steps, to achieve the objects of the embodiments of this application.

The above method according to the embodiments of this application may be implemented in hardware and firmware, or implemented as software or computer code that may be stored in a recording medium (such as a CDROM, a RAM, a floppy disk, a hard disk, or a magneto-optical disk), or implemented as computer code that is downloaded through a network, originally stored in a remote recording medium or a non-transitory machine-readable medium, and to be stored in a local recording medium, so that the method described herein may be stored in such software on a recording medium using a general-purpose computer, a dedicated processor, or programmable or dedicated hardware (such as an ASIC or an FPGA) for processing. It may be understood that a computer, a processor, a microprocessor controller, or programmable hardware includes a storage component (such as a RAM, a ROM, and a flash memory) that may store or receive software or computer code. When the software or the computer code is accessed and executed by the computer, the processor, or the hardware, the methods described herein are implemented. Furthermore, when the general-purpose computer accesses the code for implementing the methods shown herein, execution of the code converts the general-purpose computer into a dedicated computer configured to perform the methods shown herein.

It should be noted that, not all steps and modules in the procedures and the diagrams of the system structures above are necessary, and some steps or modules may be omitted based on an actual requirement. An execution order of the steps is not fixed and may be adjusted as required. The system structure described in the above embodiments may be a physical structure or a logical structure. In other words, some modules may be implemented by the same physical entity, or some modules may be implemented by a plurality of physical entities, or may be jointly implemented by some components in a plurality of independent devices.

In the foregoing embodiments, a hardware module may be implemented in a mechanical manner or an electrical manner. For example, a hardware module may include permanently dedicated circuitry or logic (for example, a dedicated processor, an FPGA, or an ASIC) to perform the corresponding operation. The hardware module may further include programmable logic or circuitry (such as a general-purpose processor or another programmable processor) that can be temporarily configured by software to perform the corresponding operation. The specific implementation (the mechanical manner, or through a dedicated permanent circuit, or a temporarily arranged circuit) may be determined based on considerations in costs and time.

The present invention has been shown and described in detail above with reference to the accompanying drawings and preferred embodiments. However, the present invention is not limited to these disclosed embodiments. Based on the foregoing plurality of embodiments, a person skilled in the art may know that more embodiments of the present invention can be obtained by merging the code review means in the different embodiments above. These embodiments are also within the protection scope of the present invention.

Nouns and pronouns about persons in this patent application are not limited to a specific gender.

## Claims

1. A method for automatically generating a solution template, comprising:
- receiving (101) an instruction inputted by a user to create a solution template;
- extracting (102) names of basic units from first industrial automation software;
- generating (103) a prompt word based on the instruction, so that a large language model (LLM) lists, by referencing the names of the basic units in the first industrial automation software, all tasks executing the instruction in sequence; and
- calling (104), based on all the tasks outputted by the LLM, corresponding basic units in the first industrial automation software, and generating (104) a connection relationship between the basic units, to obtain the solution template corresponding to the instruction.

2. The method according to claim 1, wherein the calling (104), based on all the tasks outputted by the LLM, corresponding basic units in the first industrial automation software, and generating (104) a connection relationship between the basic units comprises:
- inputting the names of the basic units in the first industrial automation software into the LLM, to determine names of basic units that need to be used for a first task in all the tasks;
- determining, through the LLM, an ordering of the names of the basic units that need to be used during execution of the first task;
- obtaining the ordering of the names of the basic units in each of all the tasks;
- obtaining an ordering set based on the ordering of the names of the basic units in each of all the tasks and an ordering of all the tasks outputted by the LLM; and
- calling, based on the ordering set, corresponding basic units in the first industrial automation software, and generating the connection relationship between the basic units.

3. The method according to claim 2, wherein the calling, based on the ordering set, corresponding basic units in the first industrial automation software, and generating the connection relationship between the basic units comprises:
- determining a basic unit corresponding to each position through the ordering set;
- calling a corresponding basic unit in an order of positions in the first industrial automation software; and
- establishing an input/output relationship between two adjacent basic units.

4. The method according to claim 1, wherein before the generating (103) a prompt word based on the instruction, so that a large language model (LLM) lists, by referencing the names of the basic units in the first industrial automation software, all tasks executing the instruction in sequence, the method further comprises:
- determining a language of the instruction; and
- determining an applicable LLM based on the language of the instruction.

5. The method according to claim 1, wherein the basic unit comprises a basic functional block or a basic shape.

6. An apparatus for automatically generating a solution template, comprising:
- a receiving module (21), configured to receive an instruction inputted by a user to create a solution template;
- an extraction module (22), configured to extract names of basic units from first industrial automation software;
- a generation module (23), configured to generate a prompt word based on the instruction, so that an LLM lists, by referencing the names of the basic units in the first industrial automation software, all tasks executing the instruction in sequence; and
- a calling module (24), configured to call, based on all the tasks outputted by the LLM, corresponding basic units in the first industrial automation software, and generate a connection relationship between the basic units, to obtain the solution template corresponding to the instruction.

7. An electronic device (300), comprising a processor (301), a communication interface (302), a memory (303), and a communication bus (304), wherein the processor (301), the memory (303), and the communication interface (302) perform communication with each other through the communication bus (304); and
the memory (303) is configured to store at least one executable instruction, and the executable instruction causes the processor to perform an operation corresponding to the method for automatically generating a solution template according to any one of claims 1 to 5.

8. A computer storage medium, storing a computer program, wherein the program, when executed by a processor, implements the method for automatically generating a solution template according to any one of claims 1 to 5.

9. A computer program product, tangibly stored in a computer-readable medium and comprising computer-executable instructions, wherein the computer-executable instructions, when executed, cause at least one processor to perform the method for automatically generating a solution template according to any one of claims 1 to 5.
